# FASCICULE DE BREVET EUROPEEN

(11) **EP 0 473 481 B1**
(45) Date de publication et mention de la délivrance du brevet: **30.11.1994**
(21) Numéro de dépôt: 91402176.1
(22) Date de dépôt: 02.08.1991
(51) Int. Cl.: H01R 25/16, H02G 3/08

(54) **Boîte de montage à entraxe variable, pour appareil électrique**
Befestigungsgehäuse mit variablem Achsabstand für elektrisches Gerät
Mounting box with variable distances between axis, for electrical apparatus

(30) Priorité: 30.08.1990 FR 9010806
(43) Date de publication de la demande: 04.03.1992
(73) Titulaire: PLANET WATTOHM, 60303 Senlis (FR)
(72) Inventeur: Coutant, Régis, F-60117 Vauciennes (FR); Laigle, Jean, F-93700 Drancy (FR)
(74) Mandataire: CABINET BONNET-THIRION

(56) Documents cités:
- EP-A- 0 289 410
- DE-U- 8 713 513
- GB-A- 2 211 364

## Description

L'invention se rapporte à une boîte de montage à entraxe variable pour appareil électrique; elle concerne plus particulièrement un perfectionnement permettant d'adapter la longueur de la boîte pour recevoir un ou plusieurs appareils électriques. Elle permet ainsi de limiter le nombre de types de boîtes pour les utilisateurs, leur assurant en outre, dans la pratique, une plus grande souplesse d'approvisionnement.

Le document de brevet FR 87.06 022 décrit un socle d'appareil électrique plus particulièrement conçu pour prendre place dans une goulotte de passage de conducteurs. ce dispositif est constitué d'un ou plusieurs éléments modulaires à profil en U et de cloisons transversales d'extrémité. Des rainures et nervures prévues sur les côtés de ces éléments permettent une certaine adaptation de longueur de l'ensemble. Cependant, l'adaptation de longueur reste limitée et les éléments sont de formes relativement complexes. De plus, le montage par vis nécessite certaines précautions.

L'invention concerne un système de conception différente, plus simple et plus facile à régler et à installer. L'idée de base de l'invention consiste à réaliser la boîte de montage sous forme de deux demi-boîtes à assemblage télescopique dans le sens longitudinal.

Plus précisément, l'invention concerne donc une boîte de montage à entraxe variable destinée à recevoir un ou plusieurs appareils électriques, caractérisée en ce qu'elle est constituée de deux demi-boîtes semblables, en ce que les dimensions transversales externes d'une portion d'assemblage d'une première demi-boîte sont sensiblement égales aux dimensions transversales internes d'une portion d'assemblage d'une seconde demi-boîte et en ce que cette dernière au moins présente une face latérale transversale ouverte pour permettre un assemblage télescopique longitudinal desdites demi-boîtes.

L'invention sera mieux comprise et d'autres avantages de celle-ci apparaîtront plus clairement à la lumière de la description qui va suivre d'un mode de réalisation actuellement préféré d'une boîte de montage conforme à son principe, donnée uniquement à titre d'exemple et faite en référence aux dessins annexés dans lesquels:
- la figure 1 est une vue en perspective éclatée représentant une boîte de montage à entraxe variable conforme à l'invention, mise en place dans une goulotte de passage de conducteurs et dont les dimensions sont ajustées pour recevoir une platine d'appareil électrique en forme de cadre rectangulaire;
- la figure 2 est une vue schématique partielle en coupe transversale illustrant une possibilité de montage de la boîte dans un type de goulotte; et
- la figure 3 est une vue de détail en coupe transversale, illustrant un des moyens de guidage longitudinal possibles des deux demi-boîtes.

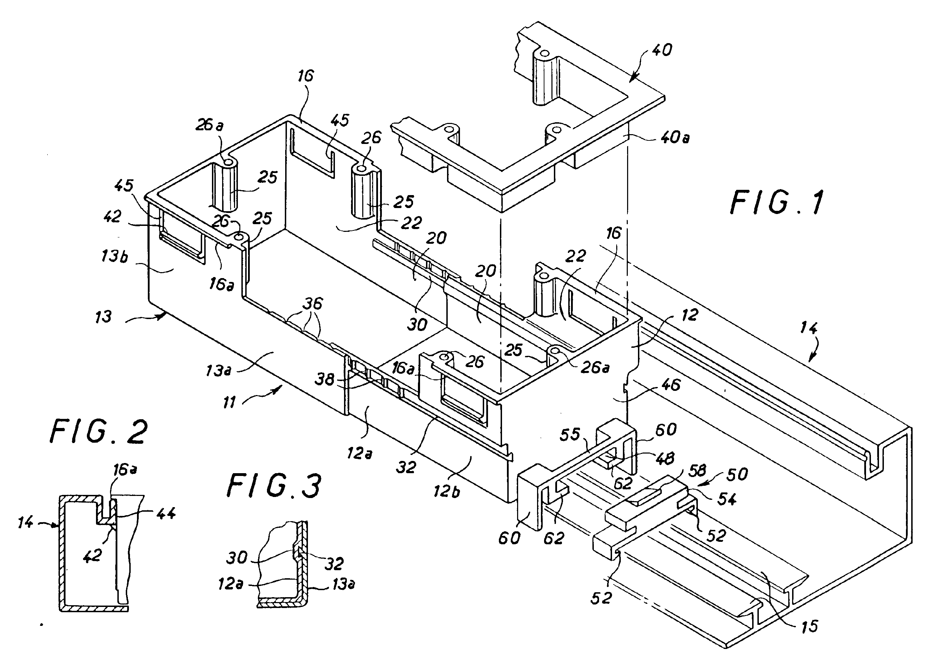

On a représenté une boîte de montage à entraxe variable 11, principalement constituée par l'assemblage de deux demi-boîtes en matière plastique moulée, semblables, mais de forme et dimensions légèrement différentes, comme on le verra plus loin. On distingue donc une première demi-boîte 12 et une seconde demi-boîte 13. Une telle boîte de montage, de dimension longitudinale ajustable pour recevoir un ou plusieurs appareils électriques, est plus particulièrement destinée à être montée dans une goulotte de passage de conducteurs 14. Cette dernière a un profil globalement en forme de U et peut être munie d'un double rail de fond 15 du modèle représenté ou autre. Elle est partiellement représentée sur la figure 1. La même goulotte est partiellement représentée en coupe transversale sur la figure 2.

Chaque demi-boîte 12 et 13 comporte une portion d'assemblage 12a, 13a et une partie de montage 12b, 13b, respectivement conformée pour recevoir une platine 40 d'appareil électrique. La partie de montage 12b ou 13b comporte, à sa partie supérieure, un bord d'ouverture 16 en forme de U, muni d'une nervure externe 16a. Pour chaque demi-boîte, les parois latérales longitudinales 20 de ladite portion d'assemblage sont plus basses que les parois latérales longitudinales 22 de la partie de montage voisine. Ladite partie de montage comporte intérieurement des moyens de fixation d'une platine 40 dimensionnée pour un ou plusieurs appareils électriques précités. Ces moyens de fixation sont ici constitués par des colonnettes 25 percées longitudinalement et venues de moulage avec les différentes parois latérales longitudinales et transversale de ladite partie de montage. Les trous 26 et 26a de ces colonnettes sont taraudés ou taraudables par des vis ou munis d'inserts. Les colonnettes sont accolées aux faces internes desdites parois latérales de la partie de montage.

Selon une caractéristique importante de l'invention, les dimensions transversales externes d'une portion d'assemblage 12a de la première demi-boîte 12 sont sensiblement égales aux dimensions transversales internes d'une portion d'assemblage 13a de la seconde demi-boîte 13 et cette dernière au moins présente une face latérale transversale ouverte pour permettre un assemblage télescopique longitudinal desdites demi-boîtes. Par conséquent, il apparaît bien que l'entraxe des trous 26a des colonnettes 25 portées par les parois transversales opposées des demi-boîtes est variable et ajustable, comme d'ailleurs l'entraxe des trous 26 des autres colonnettes homologues symétriques, permettant l'adaptation de différents types d'appareils électriques.

En outre, les demi-boîtes sont pourvues de moyens coopérants de guidage longitudinal. Ces moyens de guidage sont ici constitués par des nervures 30 et glissières 32 en queue d'aronde, définies le long des parois latérales longitudinales, en contact mutuel, des deux demi-boîtes. Le guidage peut être réalisé par tout autre moyen de guidage longitudinal. Plus précisément, dans le cas représenté, les nervures 30 sont venues de moulage sur les faces internes des parois latérales longitudinales de la demi-boîte 13 tandis que les glissières 32 sont conformées dans les parois latérales longitudinales de la demi-boîte 12 et s'ouvrent sur les faces externes de ces parois. Elles s'étendent sur toute la longueur de la demi-boîte 12. La coopération de ces moyens de guidage est illustrée par la figure 3. De plus, au moins deux parois longitudinales en contact mutuel desdites demi-boîtes, sont respectivement pourvues d'une rangée d'encoches 36 et d'une rangée de dents 38 correspondantes, coopérant afin d'ajuster rapidement et de maintenir en place les deux demi-boîtes à une distance souhaitée correspondant à un entraxe d'appareil électrique choisi. Dans l'exemple représenté, la demi-boîte 12 comporte deux rangées d'encoches 38 sur les faces externes de ses parois latérales longitudinales tandis que la demi-boîte 13 comporte deux rangées d'encoches 36 correspondantes sur les faces internes de ses parois latérales longitudinales.

La partie de montage 12b de la première demi-boîte 12 est élargie transversalement à sa partie supérieure à partir d'un niveau situé au-dessus des rainures 32, de façon que son bord supérieur 16 en forme de U ait les mêmes dimensions que celles du bord supérieur de la partie de montage 13b de ladite seconde demi-boîte 13. Cette configuration particulière de la demi-boîte 12 permet d'accueillir une platine d'appareil électrique 40 de forme générale rectangulaire. Il est à noter que les termes "inférieur" ou "supérieur" employés tout au long de la description ne sauraient faire référence à une quelconque position d'utilisation de la boîte de montage. Ils indiquent simplement la position de tel ou tel élément par rapport à un autre en supposant la paroi de fond de chaque demi-boîte placée dans un plan horizontal.

Les deux demi-boîtes 12 et 13 sont pourvues de différents moyens permettant de les assujettir à une goulotte 14 ou structure analogue.

Ainsi, chaque paroi latérale longitudinale de chaque demi-boîte comporte un crochet élastique 42, allongé, susceptible de coopérer avec un rebord supérieur 44 d'une goulotte de passage de conducteurs. Ces crochets sont prévus près des bords supérieurs 16 desdites demi-boîtes et plus particulièrement en regard et à distance constante des nervures 16a. Ils sont délimités par des découpes pratiquées dans les parois des demi-boîtes, lesquelles découpes leur donnent l'élasticité voulue. Dans l'exemple décrit, une telle découpe 45 est une lumière en forme de U. Le crochet 42, en forme de nervure rectiligne dirigée vers l'extérieur, est situé près de la base du U. Le montage est celui de la figure 2 où il apparaît clairement que la distance séparant le crochet 42 du rebord 16a correspond à l'épaisseur du rebord 44 de la goulotte, normalement conformé pour la fixation du couvercle de celle-ci. La fixation de la boîte de montage, une fois réglée à la longueur voulue, se fait donc par simple emboîtement à force dans la goulotte, entraînant le verrouillage des crochets 42. De plus, il est à noter que, du fait que l'élasticité des crochets est donnée par des découpes définies dans les parois latérales mêmes, ces crochets, une fois en prise comme représenté à la figure 2, sont bloqués par la mise en place de la platine 40, avantageusement munie d'une jupe latérale d'emboîtement 40a. Après mise en place de la platine, par vissage de celle-ci dans les colonnettes 25, ladite jupe empêche tout retrait des crochets vers l'intérieur, ce qui rend impossible un arrachement accidentel de la boîte.

En outre, pour un autre type de fixation à une goulotte munie d'un rail de fond 15 tel que représenté à la figure 1, la paroi latérale transversale 46 de chaque demi-boîte 12, 13 comporte, à sa partie inférieure, un logement de verrouillage 48, ouvert, localisé pour être positionné, après montage, au voisinage dudit rail de fond 15, plus précisément au-dessus de celui-ci. Par ailleurs, pour chaque demi-boîte, un coulisseau 50, indépendant, présente des moyens d'accrochage audit rail sous forme de deux crochets 52 en regard l'un de l'autre et conformés pour coopérer avec les bords longitudinaux extérieurs du rail double 15. Le coulisseau 50 peut ainsi facilement être assujetti audit rail. Il comporte en outre un tenon transversal 54 de forme et dimensions correspondant à l'ouverture du logement de verrouillage 48. Dans l'exemple représenté, la partie supérieure de l'ouverture du logement de verrouillage est délimitée par un simple élément flexible 55 en forme de barrette tandis que le coulisseau 50 comporte, à sa partie supérieure, une dent 58 formant rampe. L'agencement est tel que la dent 58 puisse venir s'encastrer dans le logement de verrouillage 48 après forçage de l'élément flexible 55. D'autre part, chaque demi-boîte comporte des pattes latérales 60 situées de part et d'autre du logement de verrouillage 48 et contre lesquelles viennent s'appliquer, en position de montage, les faces externes des crochets 52 dudit coulisseau. Comme cela ressort clairement de la figure 1, le logement de verrouillage 48 est conformé pour accueillir le tenon transversal 54 qui vient se loger entre l'élément flexible 55 et deux nervures 62 à profil en L, se faisant face en-dessous et de part et d'autre de l'élément flexible 54. Ces nervures viennent prendre appui sous le tenon transversal 55, au montage. Lorsque le coulisseau 50, qui vient d'être décrit, est engagé et dûment verrouillé dans le logement ouvert 48, les efforts de traction sur les appareils électriques portés par la boîte sont repris au niveau du tenon 54 et des nervures 62. Les crochets 52 sont efficacement bloqués et ne peuvent basculer vers l'extérieur, grâce à la présence des pattes latérales 60.

## Revendications

1. Boîte de montage à entraxe variable, destinée à recevoir un ou plusieurs appareils électriques, caractérisée en ce qu'elle est constituée de deux demi-boîtes (12, 13) semblables, en ce que les dimensions transversales externes d'une portion d'assemblage (12a) d'une première demi-boîte (12) sont sensiblement égales aux dimensions transversales internes d'une portion d'assemblage (13a) d'une seconde demi-boîte (13) et en ce que cette dernière au moins présente une face latérale transversale ouverte pour permettre un assemblage télescopique longitudinal desdites demi-boîtes (12, 13).

2. Boîte de montage à entr'axe variable selon la revendication 1, caractérisée en ce que lesdites demi-boîtes (12, 13) sont pourvues de moyens coopérants de guidage longitudinal (30, 32).

3. Boîte de montage selon la revendication 2, caractérisée en ce que ces moyens de guidage sont constitués par des nervures (30) et glissières (32) en queue d'aronde, définies le long de parois latérales longitudinales (20, 22), en contact mutuel, desdites demi-boîtes (12, 13).

4. Boîte de montage selon l'une des revendications précédentes, caractérisée en ce qu'au moins deux parois longitudinales (20, 22) en contact mutuel desdites demi-boîtes (12, 13) sont respectivement pourvues d'une rangée d'encoches (36) et d'une rangée de dents (38) correspondantes, coopérant afin d'ajuster rapidement et maintenir en place les deux demi-boîtes (12, 13) à une distance souhaitée correspondant à un entraxe d'appareil électrique choisi.

5. Boîte de montage selon l'une des revendications précédentes, caractérisée en ce que les deux portions d'assemblage (12a, 13a) desdites demi-boîtes (12, 13) ont des parois latérales longitudinales (20) plus basses que des parties de montage (12b, 13b) de ces demi-boîtes (12, 13) présentant chacune un bord d'ouverture (16) en forme de U et incluant des moyens de montage (25) du ou des appareils précités, et en ce que la partie de montage (12b) de ladite première demi-boîte (12) est élargie transversalement à sa partie supérieure de façon que son bord supérieur en forme de U ait les mêmes dimensions que celles du bord supérieur de la partie de montage de ladite deuxième demi-boîte (13), de façon à pouvoir accueillir une platine d'appareil électrique (40) rectangulaire.

6. Boîte de montage selon l'une des revendications précédentes, caractérisée en ce que des crochets élastiques (42) susceptibles de coopérer avec un rebord supérieur (44) d'une goulotte de passage de conducteurs (14), sont prévus sur les parois latérales longitudinales (22) desdites demi-boîtes (12, 13), près des bords supérieurs de celles-ci et en ce que ces crochets (42) sont délimités par des découpes (45) de ces parois (22), permettant le blocage desdits crochets (42) par la mise en place d'une platine d'appareil électrique (40) munie d'une jupe latérale d'emboîtement (40a) empêchent le recul des crochets (42) pour offrir une bonne résistance à l'arrachement.

7. Boîte de montage selon la revendication 6, caractérisée en ce que lesdites découpes (45) sont des lumières en forme de U.

8. Boîte de montage selon l'une des revendications précédentes, caractérisée en ce que la paroi latérale transversale (46) de chaque demi-boîte comporte, à sa partie inférieure, un logement de verrouillage (48), ouvert, localisé pour être positionné au montage au voisinage d'un rail de fond (15) ou analogue d'une goulotte de passage de conducteurs (14) et en ce qu'un coulisseau (50) présentant des moyens d'accrochage audit rail (15) comporte en outre un tenon transversal (54) de forme et dimensions correspondant à l'ouverture du logement de verrouillage (48).

9. Boîte de montage selon la revendication 8, caractérisée en ce que la partie supérieure de l'ouverture dudit logement de verrouillage (48) est délimitée par un élément flexible (55) et en ce qu'une dent (58) formant rampe est définie à la partie supérieure dudit coulisseau (50), l'agencement étant tel que ladite dent (58) vienne se positionner dans ledit logement de verrouillage (48) après forçage dudit élément flexible (55).

10. Boîte de montage selon la revendication 8, caractérisée en ce qu'elle comporte en outre des pattes latérales (60), situées de part et d'autre dudit logement de verrouillage (48) et contre lesquelles viennent s'appliquer, en position de montage, les faces externes de crochets (52) formant lesdits moyens d'accrochage du coulisseau (50), empêchant ainsi le recul des crochets (52) et offrant une bonne tenue à l'arrachement.

## Patentansprüche

1. Montagegehäuse mit variablem Achsabstand zur Aufnahme eines oder mehrerer elektrischer Geräte, dadurch gekennzeichnet, daß es durch zwei gleichartige Halbgehäuse (12, 13) gebildet ist, daß die Außenabmessungen eines Anschlußteils (12a) eines ersten Halbgehäuses (12) in Querrichtung im wesentlichen gleich den Innenabmessungen eines Anschlußteils (13a) eines zweiten Halbgehäuses (13) in Querrichtung sind, und daß letzteres zumindest eine offene Querseitenfläche für eine mögliche teleskopische Verbindung besagter Halbgehäuse (12,13) in Längsrichtung aufweist.

2. Montagegehäuse mit variablem Achsabstand nach Anspruch 1, dadurch gekennzeichnet, daß die Halbgehäuse (12,13) mit zusammenwirkenden Längsführungseinrichtungen (30, 32) versehen sind.

3. Montagegehäuse nach Anspruch 2, dadurch gekennzeichnet, daß die Führungseinrichtungen durch Rippen (30) und Gleitschienen (32) in Schwalbenschwanzform gebildet sind, die entlang von Längsseitenwänden (20,22) der Halbgehäuse (12,13) in gegenseitigem Kontakt festgelegt sind.

4. Montagegehäuse nach einem der vorhergehenden Ansprüche, dadurch gekennzeichnet, daß mindestens zwei miteinander in Kontakt stehende Längswände (20,22) der Halbgehäuse (12,13) jeweils mit einer Reihe Kerben (36) und einer Reihe entsprechender Zähne (38) versehen sind, welche zur raschen Einstellung und Halterung der beiden Halbgehäuse (12,13) in einem gewünschten Abstand entsprechend einem Achsabstand eines gewählten elektrischen Geräts zusammenwirken.

5. Montagegehäuse nach einem der vorhergehenden Ansprüche, dadurch gekennzeichnet, daß die beiden Anschlußteile (12a, 13a) der Halbgehäuse (12,13) niedrigere Längsseitenwände (20) haben als Montageteile(12b,13b) dieser Halbgehäuse (12,13), die jeweils eine U-förmigen Öffnungsrand (16) aufweisen und Montagemittel (25) für das bzw. die Geräte enthalten, und daß der Montageteil (12b) des ersten Halbgehäuses (12) in seinem Oberteil derart in Querrichtung verbreitert ist, daß sein oberer Rand in U-Form dieselben Abmessungen hat wie der obere Rand des Montageteils des zweiten Halbgehäuses (13), sodaß eine rechteckige Platine (40) eines elektrischen Geräts aufgenommen werden kann.

6. Montagegehäuse nach einem der vorhergehenden Ansprüche, dadurch gekennzeichnet, daß elastische Haken (42), die mit einem oberen Bord (44) eines Kabelkanals (14) zusammenwirken können, an den Längsseitenwänden (22) der Halbgehäuse (12,13) nahe den oberen Rändern derselben vorgesehen sind, und daß diese Haken (42) durch Einschnitte (45) dieser Wände (22) begrenzt sind, die die Blockierung der Haken (42) bei Anordnung einer Platine eines elektrischen Geräts(40) gestattet, welche mit einer seitlichen Aufsteckschürze (40a) versehen ist, die das Herausspringen der Haken (42) zwecks Gewährleistung eines guten Widerstandes gegen Ablösen verhindert.

7. Montagegehäuse nach Anspruch 6, dadurch gekennzeichnet, daß die Einschnitte (45) U-förmige Langlöcher sind.

8. Montagegehäuse nach einem der vorhergehenden Ansprüche, dadurch gekennzeichnet, daß die Querseitenwand (46) jedes Halbgehäuses in ihrem unteren Teil eine offene Verriegelungsaufnahme (48) aufweist, die bei der Montage nahe einer Bodenschiene (15) od. dgl. eines Kabelkanals (14) in Lage zu bringen ist, und daß ein Schieber (50) mit Mitteln zum Verhaken in der Schiene (15) außerdem eine querlaufende Nase (54) von der Öffnung der Verriegelungsaufnahme (48) entsprechender Form und Abmessungen aufweist.

9. Montagegehäuse nach Anspruch 8, dadurch gekennzeichnet, daß der obere Teil der Öffnung der Verriegelungsaufnahme (48) durch ein flexibles Element (55) begrenzt ist und daß ein eine Rampe bildender Zahn (58) im oberen Teil des Schiebers (50) festgelegt ist, wobei die Anordnung derart ist, daß der Zahn (58) nach Auslenken des flexiblen Elements (55) in der Verriegelungsaufnahme (48) zu liegen kommt.

10. Montagegehäuse nach Anspruch 8, dadurch gekennzeichnet, daß es weiters seitliche Pratzen (60) aufweist, die beiderseits der Verriegelungsaufnahme (48) angeordnet sind und an denen in der Montageposition die Außenflächen von die Verhakungsmittel des Schiebers (50) bildenden Haken (52) in Anlage kommen, wodurch das Herausspringen der Haken (52) verhindert und eine gute Festigkeit gegen Ablösen geboten wird.

## Claims

1. A mounting box of variable inter-axis spacing, which is intended to receive one or more items of electrical equipment, characterised in that it is formed by two similar box halves (12, 13), that the external transverse dimensions of an assembly portion (12a) of a first box half (12) are substantially equal to the internal transverse dimensions of an assembly portion (13a) of a second box half (13) and that the latter at least has an open transverse lateral face to permit longitudinal telescopic assembly of said box halves (12,13).

2. A mounting box of variable inter-axis spacing according to claim 1 characterised in that said box halves (12,13) are provided with longitudinal-guidance co-operating means (30, 32).

3. A mounting box according to claim 2 characterised in that said guidance means are formed by ribs (30) and grooves (32) of dovetail configuration, which are defined along longitudinal lateral walls (20,22), in mutual contact, of said box halves (12,13).

4. A mounting box according to one of the preceding claims characterised in that at least two longitudinal walls (20,22) in mutual contact of said box halves (12,13) are respectively provided with a row of notches (36) and a row of teeth (38) which correspond to each other, co-operating in order for rapid adjustment of the two box-halves (12,13) and holding them in position at a desired distance corresponding to a selected inter-axis spacing in respect of an item of electrical equipment.

5. A mounting box according to one of the preceding claims characterised in that the two assembly portions (12a,13a) of said box halves (12,13) have lower longitudinal lateral walls (20) than mounting portions (12b,13b) of said box halves (12,13) which each have a U-shaped opening edge (16) and including mounting means (25) for said item or items of equipment, and that the mounting portion (12b) of said first box half (12) is transversely enlarged in its upper portion so that its upper U-shaped edge is of the same dimensions as those of the upper edge of the mounting portion of said second box half (13) so as to be able to receive a rectangular plate member (40) of an item of electrical equipment.

6. A mounting box according to one of the preceding claims characterised in that resilient latches (42) capable of co-operating with an upper rim (44) of a channel for carrying conductors (14) are provided on the longitudinal lateral walls (22) of said box halves (12,13) close to the upper edges thereof and that said latches (42) are defined by cut-outs (45) in said walls (22) permitting blocking of said latches (42) by positioning of a plate member of an item of electrical equipment (40), which is provided with a lateral engagement skirt (40a) which prevents withdrawal movement of the latches (42) to offer good resistance to being pulled away.

7. A mounting box according to claim 6 characterised in that said cut-outs (45) are U-shaped openings.

8. A mounting box according to one of the preceding claims characterised in that the transverse lateral wall (46) of each box half, in its lower portion, comprises an open locking housing (48) which is located to be positioned upon mounting in the vicinity of a bottom rail (15) or the like of a channel for carrying conductors (14) and that a slider (50) having means for hooking engagement with said rail (15) further comprises a transverse lug (54) of shape and dimensions corresponding to the opening of the locking housing (48).

9. A mounting box according to claim 8 characterised in that the upper portion of the opening of said locking housing (48) is defined by a flexible element (55) and that a tooth (58) forming a ramp is defined at the upper portion of said slider (50), the arrangement being such that said tooth (58) moves into a position in said locking housing (48) after forcing said flexible element (55).

10. A mounting box according to claim 8 characterised in that it further comprises lateral lugs (60) disposed on respective sides of said locking housing (48) and against which, in the assembly position, come to bear the external faces of latches (52) forming said hooking engagement means of the slider (50), thus preventing the withdrawal movement of the latches (52) and offering good resistance to being torn away.
